# EUROPEAN PATENT APPLICATION

(11) **EP 4 593 360 A1**
(43) Date of publication of application: **30.07.2025**
(21) Application number: 24154520.1
(22) Date of filing: 29.01.2024
(51) Int. Cl.: H04L 69/28, H04L 9/40

(54) **SECURE DATA TRANSMISSION**

(71) Applicant: Siemens Aktiengesellschaft, 80333 München (DE)
(72) Inventor: Fischer, Bernhard, 2122 Wolkersdorf im Weinviertel (AT); Cech, Christian, 2483 Ebreichsdorf (AT); Chilku, Bekim, 1190 Wien (AT); Hinterstoisser, Thomas, 2102 Bisamberg (AT); Matschnig, Martin, 3430 Tulln (AT)
(74) Representative: Siemens Patent Attorneys

(57) **Abstract**

Present invention concerns a method (400) for secure data transmission from a sender (105) to a receiver (110), the sender (105) and the receiver (110) being connected with a transmission line (115). The method (400) comprises steps of creating (405) a sequence (145) of data packets (140); determining (410) individual transmission delays for the packets (140); including (410) an indication of a transmission delay of one packet (140) into a preceding packet (140) in the sequence (145); transmitting (415) the packets (140) in sequence (145) from the sender (105) to the receiver (110) over the line (115), wherein a packet (140) is transmitted at a time that is determined on the basis of its associated transmission delay. After that, it may be determined (425) whether a packet (140) was received at a time that matches the indication received in the preceding packet (140). The packet (140) may only be accepted (430) if this is the case and rejected or ignored otherwise.

## Description

Present invention concerns the transmission of data from one processing entity to another. More specifically, present invention concerns securing said data transmission against tampering.

### Background of the Invention

In many applications, two or more data processing entities pass or share data to achieve a common object. For instance, a motion controller in a manufacturing or processing plant may communicate with a user terminal, the user terminal providing control requests and the motion controller carrying out the requests on some powered machinery.

While such communication has traditionally often been implemented unprotected, a requirement to harden the system against malevolent action has risen. It is an object of present invention to provide a novel technique for securing data transmission between two data processing entities, especially against tampering, replay or injection.

The invention solves the given problem by means of subject-matter defined in enclosed independent claims. Dependent claims describe preferred embodiments.

### Disclosure of the Invention

Present invention concerns a method for secure data transmission from a sender to a receiver, the sender and the receiver being connected with a transmission line. The method comprises steps of creating a sequence of data packets; determining individual transmission delays for the packets; including an indication of a transmission delay of one packet into a preceding packet in the sequence; and transmitting the packets in sequence from the sender to the receiver over the line, wherein a packet is transmitted at a time that is determined on the basis of its associated transmission delay. It may be determined whether a packet was received at a time that matches the indication received in the preceding packet. A packet may only be accepted if this is the case.

In other words, the invention concerns a method for secure data transmission from a sender to a receiver, the sender and the receiver being connected by a transmission channel, the method comprising the following steps:
- Providing a sequence of data packets, comprising a first data packet and a second data packet, to the sender, wherein, in said sequence, the first data packet is arranged before the second data packet;
- providing respective, individual predefined values for transmission delays for the data packets of said sequence to the sender;
- including an indication of said respective value for the transmission delay of the second data packet into the first packet;
- transmitting the data packets of the sequence according to the sequence from the sender, over the transmission channel, to the receiver, wherein a data packet of the sequence is transmitted at a time that is determined on the basis of its associated individual values for the respective transmission delay;
- determining the respective time interval between the received data packets of the sequence, by the receiver,
- determining, for a received second data packet of the sequence, by the receiver, whether it was received at a time or time interval that matches the indication received in the preceding first data packet of said sequence; and
- accepting the received second data packet as received data packet, if this is the case.

The method can be performed by a system, comprising a sender, a transmission channel, and a receiver, i.e. the system is configured to perform the steps of said method.

The sequence of data packets can comprise, beside the first data packet and the second data packet, further data packets arranged within the sequence, which are transmitted in the same manner with respective transmission delays, i.e. with respective indications regarding transmission delays of subsequent data packets transmitted at the respective previous data packets, and processed further analogously.

The determination of the time interval between data packet can be performed by making reference to an absolute time or by capturing the time interval between two data packets of the sequence.

Should the reception time of a packet deviate more than a predetermined measure from a time at which reception may be expected, the packet may not be accepted. The allowed time deviation may be chosen according to a transmission speed, physical characteristics of the communication line and/or transmission or reception capabilities of the parties to the communication. Should data be modified on the way from the sender to the receiver or be injected by a third party, the timing of packets arriving at the receiver's side will be disturbed. A tampering attempt may thus be detected and data that was tampered with may not be trusted. A warning message may be generated, and steps may be undertaken to check for a possible fault or intervention to the communication.

The proposed technique may help hardening a processing system against a fault or cyber-attack. Legal obligations for system hardening like the European Cyber Resilience Act may be met. A separation between different kinds of processing systems may be facilitated. Especially, a hardware control unit like a machine controller or an energy controller may be separated from a higher-level controller like a process controller or a plant controller. This way, direct control of a higher-level controller over a low-level function may be blocked.

The technique may be easy to implement and consume very little resources. Proposed timing check is well suited to be combined with other means of securing communication, for instance checksums, signing, encryption or monitoring physical parameters of the communication line.

It is preferred that the communication channel is a communication line, like a physical line between the sender and the receiver, for instance an electric or optical line. Physical characteristics of the line are preferred to be constant over time. Especially, a transmission delay of the line should be constant. The line may be a direct line, without an intermediate system or a variable transmission delay. Should some variation in transmission delay be expected, say, on the grounds of an external influence like temperature or aging, the allowed time deviation may be increased to allow for said variation. However, for best protection the allowed deviation should be as small as possible.

However, the transmission channel can be also a logical channel, e.g., shared with other communication participants. Therefore, a channel encryption can be applied to improve the overall system security, e.g., by VPN-tunnel by a virtual private network.

The transmission delay may lie in a predetermined range and the indication may be digital so that a predetermined space of delays is available for a packet. Data protection from present scheme may grow with a growing space of delays. It is preferred that the transmission delay is a digital value. The size of the space may be an exponent of two. Transmission time for a packet may be larger than the largest foreseen transmission delay. In one example, a time for transmitting a packet may be some 10 ms and the transmission delay may be in the range of 10 to 10230 µs.

According to one embodiment, transmission delay of a packet may indicate a transmission time with respect to transmission of a previous packet.

In other words, the value of the respective transmission delay of a data packet of the sequence indicates a transmission time with respect to the transmission time of the previous data packet of the sequence.

In this, a relative timing may be implemented. A first packet in time may have a bit or sequence which may act as a time reference. The reference bit may be a first or last bit of a predetermined portion of the packet. A second packet in time may also have a reference bit or sequence. A reference may comprise a predetermined sequence of bits between start and end of a packet. The indicated transmission delay may be measured between reference points of the packets.

According to another embodiment of present invention, a transmission delay of a packet indicates a transmission time with respect to an external time reference.

In other words, the value of the respective transmission delay of a data packet of the sequence indicates a transmission time with respect to the time of an external time reference.

Here, absolute timing with respect to some common time reference may be implemented. For this, the sender and the receiver may share a common clock or have synchronized time bases. Time synchronization may be achieved through a known time distribution protocol like NTP or PTP. Alternatively, sender and receiver may be connected to a common clock or clock information may be transmitted between them via another connection.

Data to be transmitted may be distributed over the sequence of packets before transmission; and reassembled from received packets after reception.

In other words, the provided sequence of data packets can define a common data set, which can be reassembled from received and accepted data packets after reception at the receiver.

Each packet may have a payload section which may be filled with a portion of the data to be transmitted. Data transport between the sender and the receiver may be made transparent so that the proposed scheme does not affect a higher-level data source or a higher-level data sink. Should a packet be discarded or rejected, a retransmission may be initiated by some higher-level functionality. In terms of the OSI model, present invention is preferred to be implemented on the physical layer (layer 1). Packet retransmission may be implemented on a higher level, for instance on the data link layer (layer 2) or the network layer (layer 3). It is noted that the OSI model is a theoretical concept and other implementations may also be employed.

It is preferred that transmission delays, i.e. its respective predefined values regarding the transmission delays, appear irregular. A sequence of transmission delays according to a sequence of packets may appear irregular or random to an external observer. Guessing a transmission delay from a sequence of previous delays may be no more successful than guessing without extra information. For generating transmission delays, a source of entropy may be used. Some source for random data may be used, e.g., based on a white noise generator, observation of radioactive decay or detection of cosmic particles. A pseudo random data source which creates a stream of numbers that appear random based on some seed may be employed. In another embodiment, sections from a long enough deterministic sequence of random-seeming information may form a base for generating transmission delays. Such a sequence may for instance comprise a Gold or Kasami code, which can easily be generated using a fed-back shift register.

The indication of the timing delay of a successive data packet of said sequence inside a data packet is preferred to be encrypted. Accessing the timing information may be made more difficult for an attacker who tries to inject information into the communication. In another embodiment, the timing information may be secured with a secure hash which may base on an asymmetric cryptographic method. A packet may comprise payload data and control data, each of which may be cryptographically secured individually. In a preferred embodiment, both portions of the packet are signed or encrypted together.

The sender and the receiver may be connected with several transmission lines or transmission channels. The transmission lines or transmission channels may run in parallel so that a data packet may be transmitted over any one of the transmission lines from the sender to the receiver.

It is remarked that data packets can be transmitted also in parallel and the received data packets can be stored for further assessment of said time delays.

This transmission channels can be also logical channel, e.g., by individual channels of respective virtual private network. A first and a second packet may be transmitted over different transmission lines or transmission channels; wherein the first packet of said sequence comprises an indication of the transmission time of the second packet of said sequence. Packets on different transmission lines may overlap in the time domain.

An attacker would thus have to gain control over communication on two or more communication lines to fudge or inject information into the communication between the sender and the receiver. A level of security may be raised by using more than one communication line. The number of communication lines has no theoretical limit, although for practical reasons not more than some ten or some hundred communication lines may be sensible.

It is to be noted that several communication lines may share one physical medium. For instance, one optical fiber between the sender and the receiver may carry data over several separate communication lines. Different transmission lines may be separated by different used ranges of wavelengths or a time division multiplexing system. A similar scheme can be run on an electric connection. Crosstalk between the lines may be negligible or not possible. Packets may be transmitted on each line in a predetermined rhythm, but exact transmission times may vary according to the respective time delays. Transmission rhythms of the lines may differ.

According to yet another embodiment of present invention, the indication comprises information on which line a successive packet will be transmitted. The line of the successive packet may be the same or different from the line on which the packet with the indication is transmitted.

For starting up the method, initial transmission delays may be established in different fashions. According to a first variant, a predetermined number of packets is transmitted according to a predetermined sequence of transmission delays; wherein a received packet is accepted if its transmission time matches a corresponding transmission delay of the sequence. In other words, sender and receiver use predetermined transmission delay information.

The predetermined sequence may only be used for a limited number of packets. The sequence may have a predetermined length and may or may not be cyclic. The sequence may be shared on both sides according to a different scheme. In one embodiment, the sequence may be hard-coded or otherwise determined on both sides before operation.

According to a second variant, a predetermined number of packets may be transmitted without valid indication information; wherein a received packet is accepted irrespective of previously received transmission delay information. Here, the timing check may be disabled for startup.

In both variants, timing information may be transmitted as part of the packets and the above-described scheme may be activated after transmission of a predetermined number of packets.

The proposed method may be carried out, completely or in part, by electronic execution means like a computer. To these ends, the method may be formulated as a computer program product with program code means. The method above described may comprise the computer method. Advantages or features of the method may apply to the method and vice versa.

The method may also be carried out by digital logic circuitry, which may be configurable. Configuration may be done in the field, i.e., while the corresponding hardware is already connected to external circuitry. Such configurable logic may comprise a semiconductor chip known as FPGA (field programmable gate array).

According to another aspect of present invention there is proposed a computer program product, the computer program product comprising instructions causing processing circuitry to perform a method according to one of the above claims when executed on the processing circuitry. The circuitry may comprise electronic circuitry which may be programmable or configurable. A programmable circuitry may comprise a computer and a configurable circuitry may comprise an FPGA.

According to yet another aspect of present invention a sender for secure data transmission to a receiver is proposed, the sender being adapted to be connected to a receiver with a transmission line. In this, the sender comprises a processing unit that is adapted to: create a sequence of data packets; determine individual transmission delays for the packets; include an indication of a transmission delay of one packet into a preceding packet in the sequence; and transmit the packets in sequence to the receiver over the line; wherein a packet is transmitted at a time that is determined on the basis of its associated transmission delay.

One more aspect of present invention concerns a receiver for secure data transmission from a sender, wherein the receiver is adapted to be connected to a sender with a transmission line. In this, the receiver comprises a processing unit that is adapted to: receive a sequence of packets from the sender; determine, for a received packet, whether it was received at a time that matches an indication received in a preceding packet; and accept the received packet if this is the case. A packet for which this condition is not fulfilled may be dropped, rejected or discarded.

A system comprises a sender disclosed herein, and a receiver disclosed herein. The system may be adapted to perform motion control or control a flow of energy, for instance in a solar power plant or a power inverter.

Present invention may be implemented through configurable logic. In one preferred embodiment, at least one of either the sender or the receiver are realized by a Hardware App inside an ASIC. The hardware app may comprise logic or memory elements which are configured to interconnect such that the described functionality is achieved. The Hardware App may be easy to configure and not require many resources. At the same time, the Hardware App may be very efficient and be used at high communication speed.

The system may also comprise a circuit board to which the sender and the receiver are connected. The transmission line may be realized on or affixed to the circuit board. In one embodiment, said line may comprise one or more electrically conductive traces on the board. In another embodiment, the sender and the receiver may reside on different circuit boards which are directly interconnected with an electric or optical communication line.

### Brief Summary of the Enclosed Figures

The above-described properties, features and advantages of present invention as well as the way they are achieved will be made clearer and better understandable in the light of the following discussion, making reference to exemplary embodiments shown in accompanying figures, in which
- Figure 1: shows an exemplary system;
- Figure 2: shows a sender;
- Figure 3: shows a receiver; and
- Figure 4: shows a schematic diagram of a method.

### Detailed Exemplary Embodiments of the Invention

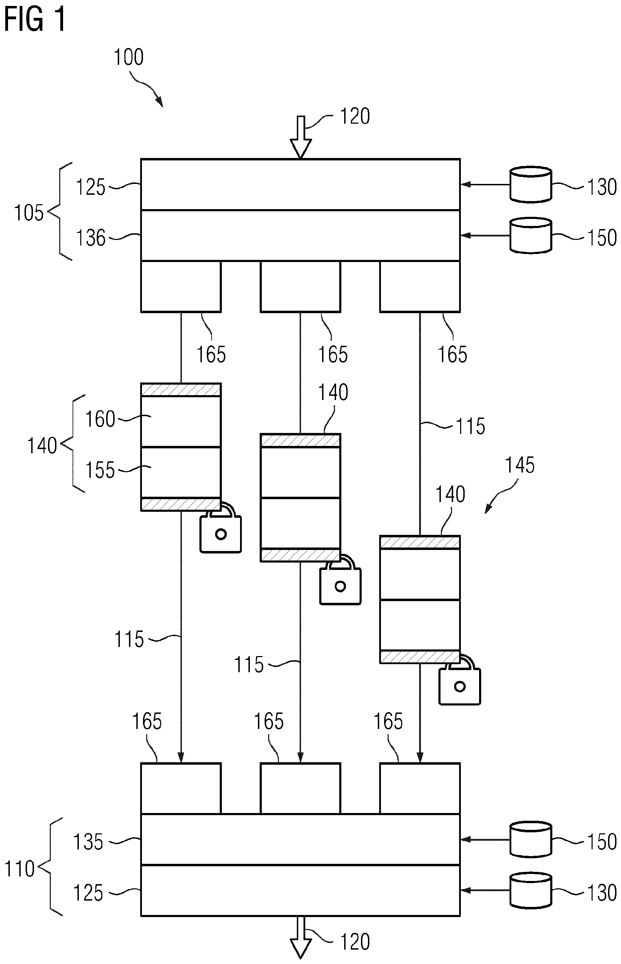

Figure 1 shows an exemplary system 100, comprising a sender 105 and a receiver 110 which are connected to one or more communication lines 115. The sender 105 is adapted to accept some data 120, which may be represented as static data, dynamic data or a stream of data, and transmit it over the at least one line 115. Data 120 is considered digital data; analog data may be digitized, transmitted and changed back into analog form. It is to be understood that the system 100 may also be adapted to operate in both directions wherein the sender 105 is also a receiver and the receiver 110 is also a sender 105. Such duplex communication may use the same or dedicated communication lines 115 for the different directions.

On the side of the sender 105, the data 120 may first be encrypted using an encryption engine 125. A key for encryption may be stored in a secure storage 130. Encryption may be done symmetric or asymmetric. A cryptographic key for symmetric encryption may be negotiated between the sender 105 and the receiver 110. The key may be temporary and can be called session key.

Before or after encryption, the data 120 may be divided in a data unit 135 so that sections of the data 120 may be transported in packets 140. All packets 140 may have the same size, e.g. 1500 byte. The packets 140 are preferred to be individually identifiable, e.g. through a number. A sequence 145 of packets 140 may be defined so that it is known for each packet which other packet is its predecessor and which one is its successor.

A sequence 145 of packets 140 may be transmitted over one or more of the lines 115. In all cases, packets 140 of a sequence 145 will be transmitted in the order of the sequence 145.

A sender unit 136, which corresponds to the data unit 135, performs configuration, timing and transmission of packets 140. Each packet 140 is assigned to a transmission delay which may be read from some timing configuration storage 220 or timing configuration generator 150. An indication of the transmission delay of one packet 140 will be included or attached to a preceding packet 140 of the same sequence 145.

Data 120 may be split up and distributed over the packets 140 of one or more sequences 145. Each packet 140 may comprise a data portion 155 which holds part of the data 120, and a control portion 160 which holds control information like an identification of the packet 140, an indication of a transmission delay of a successive packet 140, an identification of a successive packet 140 and/or an identification of a sequence 145 the successive packet 140 is part of.

Each line 115 may form a communication channel 165. It is to be noted that several channels 165 may share one line 115. The receiver 110 may be configured similarly to the sender 105 and comprise a data unit 135 which is adapted to receive packets 140 transmitted over one of the lines 115 or through one of the channels 165, respectively. Here, the data unit 135 is adapted to determine a reception time of a packet 140, e.g. by capturing the absolute or relative time of arrival of the data packets, in particular by capturing the time delay between the individual data packets of the sequence 145, and compare it to an indication of the planned reception time of that packet 140. The planned reception time may be read from a preceding packet 140 or from a timing configuration storage 150 or timing configuration generator 150 on the side of the receiver 110.

Should the measured reception time match the planned reception time closely enough, the packet 140 may be accepted and processed further. Should a match not be determined, i.e. if the packet 140 has arrived too early or too late at the receiver 110, the packet 140 may be dropped, discarded or rejected. From packets 140 that were accepted, encrypted data 120 may be reassembled and decrypted in a decryption engine 125 which may rely on a cryptographic key from a secure storage 130. The data 120 may then be provided to some data sink where it may be processed or interpreted further.

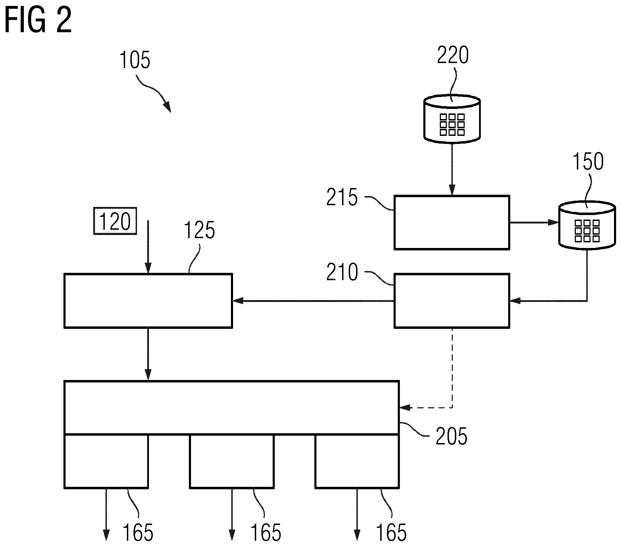

Figure 2 shows a schematic of an exemplary sender 105 in more detail. A transmitter 205 is provided to do the actual transmitting, i.e. effecting a physical signal on a communication line 115 according to information to be transmitted. The transmitter 205 may be parametrized with a transmission delay so that a packet 140 to be transmitted will be sent out at a specific time. The parameter may indicate a deviation from a general transmission time, which may be a regular frequency of packet 140 transmissions on a given line 115 or channel 165. The parameter may also indicate a transmission time relative to the transmission time of a previous packet 140.

The delay parameter is provided by a channel delay data fetch unit 210. The same unit 210 may provide control data to the encryption engine 125. Timing configuration data may be drawn from the timing control configuration data store / generator 150. The store or generator 150 may be fed by a configuration loader 215, which may use a timing configuration data source 220 for generating transmission delay. It is preferred that delays of the packets 140 appear random so that it is hard to predict a transmission delay on the basis of one or more previous transmission delays. Ideally, the delays in the sequence 145 are actually random. A sequence of transmission delays may be predetermined and the data source 220 may comprise computer memory like secure memory, an SD card or some cloud storage or remote service. Transmission delays may be generated, e.g. by a random number generator or a pseudo random number generator or on the basis of non-cloneable hardware.

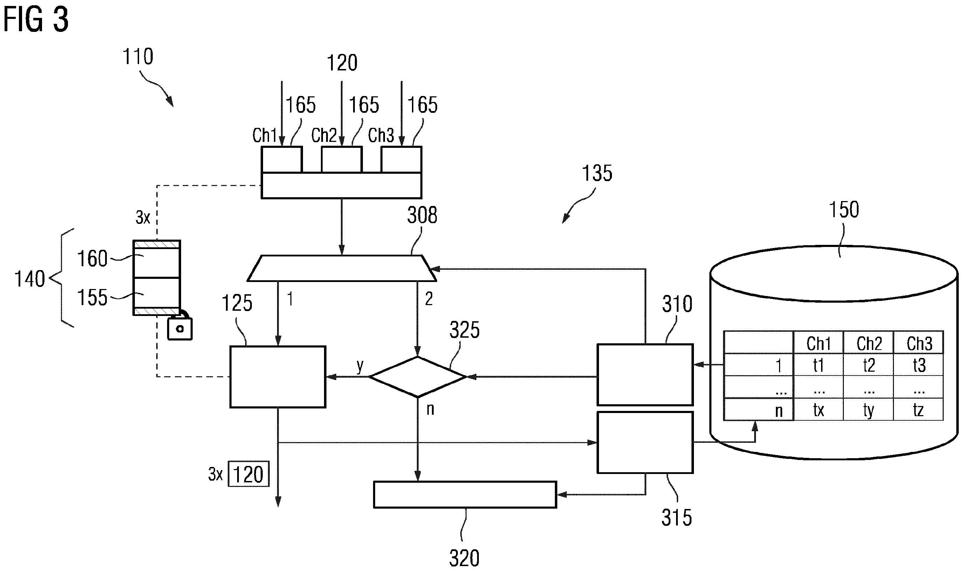

Figure 3 shows a schematic of an exemplary receiver 110. One or more channels 165 terminate at a receiver 305 which is adapted to determine the time at which a packet 140 is received. A generator 310 may provide a timestamp indicating at which time a specific packet 140 was received.

A received packet 140 may be decrypted in the decryption engine 125 which may correspond to the encryption engine 125 of the sender 105. After decryption, a resulting data portion 155 may be used to reassemble data 120 and a resulting configuration portion 160 may be used to check for correct transmission timing. A data portion 155 may only be further processed if the timing has been found good.

Timing checks may be disabled for instance during startup of the proposed transmission method. If timing checks are performed, a channel delay data fetch unit 310, which corresponds to the channel delay data fetch unit 210 of the sender 105 (cf. Figure 1), may provide information at what time a specific packet 140 is expected to be received.

The unit 310 may be fed from the timing configuration storage or generator 150. In presently shown embodiment, the timing storage 150 comprises a round robin memory which may be primed with timing information. The timing information is organized in rows and column, the rows corresponding to a round and the columns corresponding to predetermined delays for the different channels 165. The number of channels 165 is preferred to match the number of columns in the table stored in the storage 150. The number of rounds may be chosen freely to adapt to a desired length of a startup phase.

Decrypted configuration portions 160 of the packets 140 may be written into the timing storage 150 through a delay data configuration check and update unit 315. The unit 315 may check incoming configuration data 160 for integrity and pass on only configuration data 160 that was found good. In case of an integrity error, a signal may be sent to a fault and alarm unit 320.

Timing data may be passed by the channel delay data fetch unit 310 from the storage 150 to a comparison unit 325 which compares it to the timestamp information provided by the generator 308. The timestamp and the timing data may be found to match if they differ no more than a predetermined amount. This amount may be chosen such that jitter or processing element tolerances will not lead to false negative decisions. Should the timestamp not match the timing information, an error may be raised at the fault and alarm unit 320. Otherwise, reassembling of data 120 from the data portion 155 of the packet 140 in question may be allowed. Finally, the decrypted and reassembled data 120 may be provided.

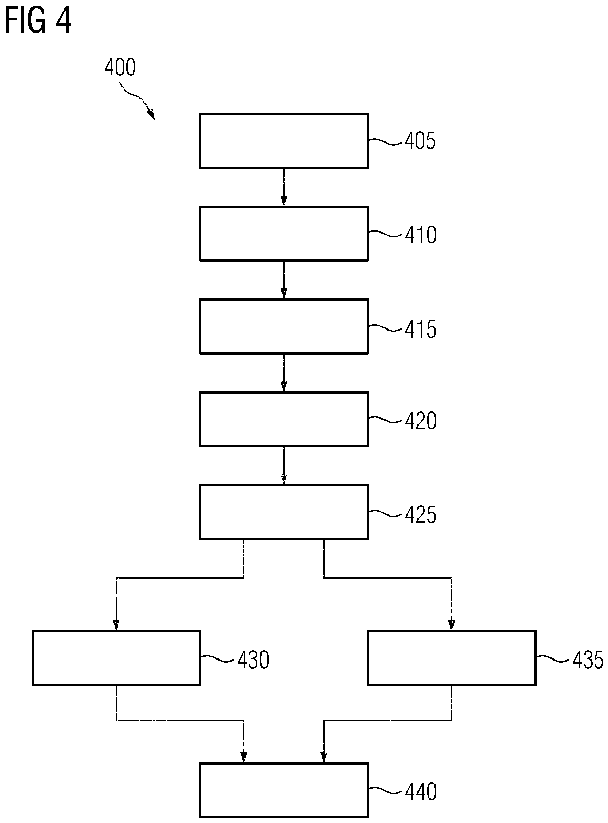

Figure 4 shows a schematic diagram of a method 400 for secure data transmission. In a step 405, data 120 may be divided into packets 140 on side of the sender 105. The packets 140 are comprised by a sequence 145 and for each packet 140, an individual transmission delay may be determined in a step 410. For a packet 140, the associated transmission delay may be stored in a preceding packet 140 in the sequence 145.

The sequence 145 of packets 140 is transmitted from the sender 105 to the receiver 110 in a step 415. In this, each packet 140 is transmitted at a time that is precisely determined on the basis of the associated transmission delay.

In a step 420, a packet 140 is received by the receiver 110 and a timestamp of the reception time is generated. The timestamp may be compared with predetermined timing information in a step 425. The timing information may especially be derived from a preceding packet 140.

Should the timestamp come close enough to the timing information, the packet 140 may be accepted in a step 430. Otherwise, the packet 140 may be rejected or ignored in a step 435. Accepted packets 140 may be gathered in a step 440 and data 120 inside the packets 140 may be reassembled.

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

Independent of the grammatical term usage, individuals with male, female or other gender identities are included within the term.

### Reference List

- 100: system
- 105: sender
- 110: receiver
- 115: communication line
- 120: data

- 125: encryption / decryption engine
- 130: secure storage
- 135: data unit
- 136: sender unit
- 140: data packet
- 145: sequence

- 150: timing configuration storage / generator
- 155: data portion
- 160: configuration portion
- 165: communication channel

- 205: timed transmitter
- 210: channel delay data fetch unit
- 215: configuration loader
- 220: timing configuration data source

- 305: receiver
- 308: time stamp generator
- 310: channel delay data fetch unit
- 315: delay data configuration check and update unit
- 320: fault and alarm unit
- 325: comparison unit

- 400: method
- 405: divide data into packets
- 410: determine individual delays for a sequence of packets
- 415: transmit
- 420: determine reception time
- 425: compare reception time with indicated time
- 430: accept packet
- 435: ignore packet
- 440: reassemble data

## Claims

1. Method (400) for secure data transmission from a sender (105) to a receiver (110), the sender (105) and the receiver (110) being connected with a transmission line (115), the method comprising the following steps:
- creating (405) a sequence (145) of data packets (140);
- determining (410) individual transmission delays for the packets (140);
- including (410) an indication of a transmission delay of one packet (140) into a preceding packet (140) in the sequence (145);
- transmitting (415) the packets (140) in sequence (145) from the sender (105) to the receiver (110) over the line (115), wherein a packet (140) is transmitted at a time that is determined on the basis of its associated transmission delay;
- determining (425), for a received packet (140), whether it was received at a time that matches the indication received in the preceding packet (140); and
- accepting (430) the received packet (140) if this is the case.

2. Method (400) according to claim 1, wherein a transmission delay of a packet (140) indicates a transmission time with respect to transmission of a previous packet (140).

3. Method (400) according to claim 1, wherein a transmission delay of a packet (140) indicates a transmission time with respect to an external time reference.

4. Method (400) according to one of the previous claims, wherein data to be transmitted is distributed over the sequence (145) of packets (140) before transmission and reassembled from received packets (140) after reception.

5. Method (400) according to one of the previous claims, wherein the transmission delays appear irregular.

6. Method (400) according to one of the previous claims, wherein the indication of the timing delay of a successive packet (140) inside a packet (140) is encrypted.

7. Method (400) according to one of the previous claims, wherein the sender (105) and the receiver (110) are connected with several transmission lines (115); wherein a first and a second packet (140) are transmitted over different transmission lines (115); wherein the first packet (140) comprises an indication of the transmission time of the second packet (140).

8. Method (400) according to one of the previous claims, wherein a predetermined number of packets (140) are transmitted according to a predetermined sequence (145) of transmission delays; wherein a received packet (140) is accepted if its transmission time matches a corresponding transmission delay of the sequence (145).

9. Method (400) according to claim 8, wherein the predetermined sequence (145) is used for a limited number of packets (140).

10. Computer program product, the computer program product comprising instructions causing processing circuitry to perform a method (400) according to one of the above claims when executed on the processing circuitry.

11. Sender (105) for secure data transmission to a receiver (110), the sender (105) being adapted to be connected to a receiver (110) with a transmission line (115), the sender (105) comprising a processing unit that is adapted to:
- create a sequence (145) of data packets (140);
- determine individual transmission delays for the packets (140) ;
- include an indication of a transmission delay of one packet (140) into a preceding packet (140) in the sequence (145); and
- transmit the packets (140) in sequence (145) to the receiver (110) over the line (115);
- wherein a packet (140) is transmitted at a time that is determined on the basis of its associated transmission delay.

12. Receiver (110) for secure data transmission from a sender (105), the sender (105) and the receiver (110) being connected with a transmission line (115), the receiver (110) comprising a processing unit that is adapted to:
- receive a sequence (145) of packets (140) from the sender (105);
- determine, for a received packet (140), whether it was received at a time that matches the indication received in a preceding packet (140); and
- accept the received packet (140) if this is the case.

13. System (100), comprising a sender (105) according to claim 1 and a receiver (110) according to claim 12.

14. System (100) according to claim 13, wherein at least one, sender (105) or receiver (110), are realized by a Hardware App inside an ASIC.

15. System (100) according to one of claims 13 and 14, further comprising a circuit board to which the sender (105) and the receiver (110) are connected.
